# EUROPEAN PATENT SPECIFICATION

(11) **EP 3 078 734 B1**
(45) Date of publication and mention of the grant of the patent: **12.06.2019**
(21) Application number: 16164233.5
(22) Date of filing: 07.04.2016
(51) Int. Cl.: C12G 1/09, C12G 1/06

(54) **REMUAGE APPARATUS AND METHOD**
VORRICHTUNG UND VERFAHREN ZUR REMUAGE
APPAREIL ET MÉTHODE DE REMUAGE

(30) Priority: 08.04.2015 IT MI20150494
(43) Date of publication of application: 12.10.2016
(73) Proprietor: UNIVERSITA' DEGLI STUDI DI MILANO, 20122 Milano (IT)
(72) Inventor: GUIDETTI, Riccardo, 20131 Milano (IT); FERRARI, Enrico, 20135 Milano (IT); CIVELLI, Raffaele, 22070 Valmorea (CO) (IT); MARAI, Simone Virginio, 20097 San Donato Milanese (MI) (IT); ANCELLOTTI, Gianpietro, 20133 Milano (IT); SALGHETTI, Davide, 25040 Corte Franca (BS) (IT); BEGHI, Roberto, 20161 Milano (IT); GIOVENZANA, Valentina, 20900 Monza (MB) (IT)
(74) Representative: Zelioli, Giovanni

(56) References cited:
- EP-A2- 2 792 403
- WO-A2-2010/080665
- FR-A1- 2 425 475
- FR-A1- 2 567 903
- FR-A1- 2 687 409
- US-A- 3 533 602
- US-A1- 2007 291 580

## Description

### [TECHNICAL FIELD]

The present invention is defined by the claims and relates to a remuage apparatus and a remuage method using the claimed apparatus.

### [PRIOR ART]

Methods for sparkling wine production include the so-called "classic method" (or *méthode champenoise,* named after the French region of Champagne).

According to the "classic method", after an initial fermentation the wine is fermented again in the bottle by adding selected sugars and yeasts (*liqueur de tirage*). The wine will thus acquire its typical pressure, visible in the form of small bubbles, caused by the carbon dioxide produced by the second fermentation ("refermentation") occurring in the bottle.

After a period of rest for in-bottle fermentation, which for a high-quality wine will take at least 12/15 months, the *remuage* process is carried out, which is the subject of the present invention. The word *remuage* derives from French ("riddling" in English), and relates to preparing the bottle for removal of wine deposits. According to the most traditional techniques, the bottles are arranged on special racks (called *pupitres*), where the bottle is positioned with the neck lower than the bottom; the bottle is continuously rotated by hand on the support in order to cause the lees of dead yeast to deposit onto the cap. Traditionally, the remuage phase lasts about 30 days.

The last processing step, called *dégorgement,* is then carried out, wherein the wine contained in the bottle neck is frozen and the cap is removed in order to let the deposit come out under pressure.

The bottle is then typically topped up with (aged) wine syrup and sugar (*liqueur d'expedition*); the amount of sugar introduced will determine the characteristics of the sparkling wine, ranging from *demi-sec* to *extra-brut.*

At this point, the sparkling wine bottle is corked with the traditional mushroom-shaped cork, and a wire cage is added to prevent the cork from coming out because of the pressure developing inside the bottle.

As aforementioned, in smaller wineries the remuage process is carried out, in accordance with a traditional manual method, on wooden racks called *pupitres*; in larger wineries, machines called *gyropalettes* are used instead.

*Gyropalette* machines are a partial solution to the problem of the labour costs incurred for moving the bottles; however, *gyropalette* machines require a high initial investment, while the remuage process will still last as long as about 7 days.

A winery using the classic method might not be able to meet a suddenly increasing demand for bottles, due to long waiting times. Therefore, it is desirable to reduce the duration of the remuage phase.

A few solutions are known in the art which aim at shortening the duration of the remuage process.

Document FR2617826 describes a system for shaking bottles of sparkling wine positioned on a system of rotary rollers, which comprise protuberances for shaking the bottle.

Document FR2609472 describes a system for pre-treating bottles, which are then placed into *gyropalettes*; such system emulates, by means of rollers with helical grooves, the initial shaking of the bottles carried out in the traditional manual way.

Although the solutions disclosed by said documents allow for shorter processing times, the advantage that they offer is not appreciable on a large scale.

A further solution known from document FR2687409 provides an alternative remuage treatment based on ultrasound. According to the solution of FR2687409, a system of pulleys and cables is used for hanging the bottles; such bottles are placed by turn into a liquid that is stressed by means of ultrasonic transducers; a timer regulates the bottle immersion time, which lasts a few seconds. Bottle motion is ensured by an electric motor that drives the pulleys and cables. According to FR2687409, treatment time is reduced from a few weeks to approx. 48 hours when using the apparatus described in FR2687409.

However, the solution disclosed in FR2687409 still suffers from considerable drawbacks. First and foremost, the cable-driven motion of the bottles is complex and unreliable, with the risk of damage to the bottles, which are kept in continuous motion, stopping only for a few seconds. Also, the remuage treatment according to FR2687409 lasts two days; though shorter, it is still too long. In addition, the system known from FR2687409 is not suitable for treatment of a large number of bottles, which must be hung and moved on the cables. Finally, the system known from FR2687409 uses a liquid (e.g. water) as an ultrasound transmission means, thus suffering from limitations as regards the coupling at the bottle interface, and in terms of energy dispersion and anisotropy for what it concerns the direction of propagation of mechanical waves.

US-3533602-A describes an apparatus for riddling wine bottles comprising a rack for receiving the wine bottles in inverted positions and for supporting each bottle in a selected one of a plurality of positions inclined from the vertical in different directions. It is described a remuage device with mechanical couplings using non-ultrasonic vibration frequencies.

### [OBJECTS AND SUMMARY OF THE INVENTION]

It is one object of the present invention to provide a remuage apparatus and a remuage method that solve some of the problems suffered by the prior art.

The present invention aims at providing a remuage apparatus and a remuage method which are alternative to prior-art solutions.

In particular, it is one object of the present invention to provide a remuage apparatus and a remuage method wherein the duration of the treatment is reduced.

It is a further object of the present invention to provide a remuage apparatus and a remuage method that will allow treating one or more bottles simultaneously.

It is another object of the present invention to provide a remuage apparatus and a remuage method that will allow treating different batches of bottles in a consistent and effective manner.

It is also an object of the present invention to provide a remuage apparatus and a remuage method which are advantageous and effective in improving sparkling wine production and which are attractive for wineries.

It is yet another object of the present invention to provide a remuage apparatus and a remuage method which comply with the "classic method" of production of sparkling wine.

These and other objects of the present invention are achieved through a remuage apparatus and a remuage method incorporating the features set out in the appended claims, which are intended to be an integral part of the present description.

A general idea at the basis of the present invention is to provide a remuage apparatus comprising a support element configured to hold one or more bottles in at least one tilted position with respect to the vertical; the apparatus further comprises at least one vibrating element configured to be mechanically coupled with said one or more bottles, and the at least one vibrating element comprises vibration means adapted to induce a mechanical vibration at ultrasonic frequencies in said one or more bottles.

Therefore, the present invention proposes the use of ultrasonic vibration to be induced in the bottles via a direct mechanical coupling, so as to be able to speed up the remuage operation. Advantageously, such ultrasound generates vibrations in the bottles, which cause the lees to slide faster along the natural slopes of the glass of the tilted bottle. The combination of ultrasound and bottle inclination will cause the lees to accumulate quickly in the neck of the bottle, thus speeding up the remuage phase.

A further general idea at the basis of the present invention is to provide a remuage method using the apparatus according to at least claim 1, comprising the steps of: positioning one or more bottles onto a support element in at least one tilted position with respect to the vertical; and inducing a mechanical vibration at ultrasonic frequencies in said one or more bottles by means of a vibrating element mechanically coupled with said one or more bottles.

Therefore, this method is based on the same observations already made herein with reference to the remuage apparatus.

According to the present invention, it is advantageously possible to reduce the remuage process times by introducing an improved and technologically innovative method based on the use of ultrasound applied via a direct mechanical coupling.

A further general idea out of the scope of the claimed invention is to provide a kit for converting a gyropalette machine, including at least one support element configured to hold bottles in a tilted position with respect to the vertical; with this kit, which is applicable to existing gyropalette machines, a vibrating element is mechanically associated with the gyropalette machine, which element comprises vibration means adapted to induce a mechanical vibration at ultrasonic frequencies in bottles mechanically coupled with the vibrating element.

This conversion kit may allow, therefore, transforming gyropalette machines into remuage apparatus according to the present invention, thus improving their efficacy and treatment speed. At the same time, this conversion kit allows improving existing gyropalette machines without incurring in higher costs for purchasing new machinery.

Further particular and advantageous aspects will become more apparent from the following detailed description and from the dependent claims, which are an integral part of the present description.

### [BRIEF DESCRIPTION OF THE DRAWINGS]

Some preferred and advantageous examples of embodiment of the present invention will now be described by way of non-limiting example with reference to the annexed drawings, wherein the same reference numerals are used to indicate similar components, materials or functions, and wherein:
- Figure 1 schematically shows a first embodiment of a remuage apparatus according to the present invention.
- Figures 2, 3, 4 and 5 illustrate various operating configurations of a second embodiment of a remuage apparatus according to the present invention.
- Figure 6 illustrates three phases of the treatment carried out on one bottle undergoing the remuage method of the present invention.

The drawings show different aspects and embodiments of the present invention and, where appropriate, similar structures, components, materials and/or elements are indicated in the various drawings by the same reference numerals.

### [DETAILED DESCRIPTION OF THE INVENTION]

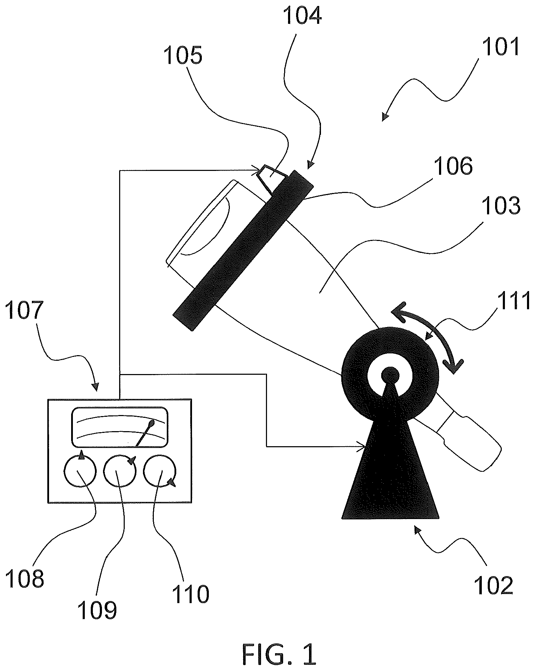

Figure 1 schematically shows a first embodiment of a remuage apparatus 101 according to the present invention.

The remuage apparatus 101 comprises a support element 102 adapted to hold a bottle 103 in a tilted position with respect to the vertical.

In the present description, "tilted position" will refer to any position in which the bottle is not upright or vertical; a "vertical" bottle is a bottle the bottom of which lies on a flat surface, i.e. the typical position of an open bottle resting on a table. For example, a bottle lying on its side or overturned with the (sealed) cork down, or in the position shown in Figure 1, is in a "tilted position".

For example, the support element 102 consists of a passive support structure that allows, just like the *pupitre* of the classic method, supporting the bottle 103 in a tilted position facing downwards, so as to facilitate lees evacuation. Support is preferably provided by a suitably sized hollow PCV cylinder into which the bottle 103, which is inserted therein from the neck with the cork facing downwards, fits simply by friction.

The remuage apparatus 101 further comprises a vibrating element 104, which is mechanically coupled with the bottle 103. In its turn, the vibrating element 104 comprises vibration means 105 adapted to induce a mechanical vibration at ultrasonic frequencies in the bottle 104.

In particular, the vibrating element 104 represents the active part of the apparatus 101. In the example, the vibrating element 104 comprises one or more piezoelectric transducers 105, which induce an ultrasonic mechanical vibration in the bottle 103 through a coupling flange 106.

The coupling flange 106 preferably consists of, without being limited to, two semicircular bodies which can be screwed to each other, and which embrace the body of the bottle 103. On the flange 106 a number of housings are formed for fitting the transducers 105 with different orientations, thus ensuring that the vibrations will be applied along different directions, as will be further explained below.

In a preferred embodiment, the transducer 105 comprises two rings of piezoelectric material (also called "smart material") overlapped and tightened to each other, since they are preloaded by two metal plates. When electric voltage is applied to the transducer, the ring will react by becoming mechanically deformed and oscillating at a very high frequency with micrometric movements, thus producing ultrasonic waves. The transducer 105 is applied to the bottle 103 via a coupling flange 106. In a preferred embodiment, the coupling flange 106 comprises an aluminium ring cut into two semicircular halves that can be re-screwed to each other, thus taking again the original shape and embracing the cylindrical body of the bottle. A number of housings having different orientations are formed on the flange to allow fitting the transducer (by means of suitable hardware) and applying vibrations along different directions with respect to the bottle axis.

The remuage apparatus 101 allows, therefore, positioning a bottle 103 onto the support element 102 in at least one tilted position with respect to the vertical, and inducing a mechanical vibration at ultrasonic frequencies in the bottle 103 via the vibrating element 104 mechanically coupled thereto.

According to the invention, the vibrating element 104 is configured to maintain a rigid interface mechanical coupling between the vibration means 105 and the bottle 103, in order to transmit the mechanical vibration.

In the embodiment shown in Figure 1, and according to the invention, the vibration means comprises a piezoelectric transducer 105 with ultrasonic vibration, which is configured to stress the bottle 103 in an axial direction with respect to the longitudinal axis of the same.

In an embodiment (not shown), further ultrasonic vibration transducers are employed.

In particular, in addition to the above axial transducer, the vibrating element may be provided with at least one second tangential transducer configured to stress the bottle in a tangential direction with respect to the circular section of the bottle sidewall.

According to the invention, the stress involved is at least a well-defined axial stress. In some embodiments, the stress may additionally be tangential. Such a stress would be impossible to attain by immersion of the bottle in water subjected to ultrasound, which would result in a substantially hydrostatic stress on the bottle. Ultrasonic stress in a direction normal to the circular section of the bottle sidewall would make the remuage performance worse, contributing to bringing the lees back up in suspension in the wine, i.e. having an undesired effect.

The apparatus 101 further comprises a control unit 107 that allows controlling the operating parameters of the apparatus 101 itself.

The control unit 107 may comprise first control means 108 and 109, operationally connected to the vibration means 105. Through the knob 108, the operator can set the time intervals of activation of the vibration means according to an appropriate duty cycle. By using the knob 109, the operator can set the (ultrasonic) oscillation frequency of the vibration means, when this option is made available by special adjustable transducers. Preferably, the predetermined oscillation frequency is comprised between 20 and 50 kHz, more preferably comprised between 25 and 30 kHz or between 35 and 45 kHz. In particular, commercial transducers with vibration frequencies of 28 kHz or 40 kHz may be used.

In a preferred and advantageous embodiment, the support element 102 further comprises rotation means 111, schematized as an arrow. Such rotation means may comprise known hinges or linkages, as conceivable by a man skilled in the art.

The rotation means 111 are configured to change the inclination of the bottles 103 with respect to the vertical over time.

To this end, the control unit 107 may comprise second control means 110, operationally connected to the rotation means 111. Through the knob 110, the operator can set the periodic variation of the inclination of the bottle according to a predetermined time law.

In particular, it is desirable to combine the mechanical vibration with a gradual increase in the inclination of the bottle in the overturning direction, so as to promote the accumulation of the residues in the neck of the bottle, thus improving the remuage.

Of course, other alternative embodiments of the control unit 107 may be conceived, which may comprise different interfaces, computer or remote control, etc.

The remuage apparatus 101 is configured to implement a remuage method according to the present invention.

The apparatus 101 is particularly suitable for use at experimentation level, for verifying the effect of different angles of inclination of the bottle and different times and modes of application of the vibration, in order to find out the optimal remuage conditions.

Preliminary experimental campaigns conducted by the Applicant have shown that the present invention ensures a much shorter remuage time, the obtainable results being equal.

The traditional remuage method using *pupitres* takes about 30 days; the more modern remuage method on gyropalette takes about 7 days; the present invention allows completing the remuage in approximately 4 hours.

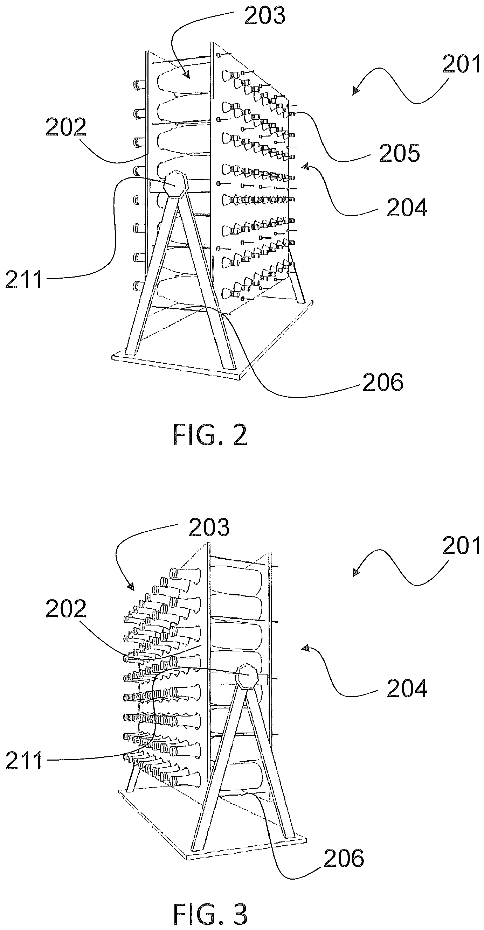

Figure 2 shows a further embodiment of a remuage apparatus 201 according to the present invention.

Said apparatus 201 is particularly suitable for industrial use, i.e. for use in a winery where a remuage treatment has to be carried out on a large number of bottles.

The structure of the apparatus 201 is similar to that of a gyropalette machine, improved in accordance with the present invention.

The remuage apparatus 201 comprises a support element 202 configured to hold a plurality of bottles 203 in at least one tilted position, as obtainable with traditional gyropalette machines. The apparatus 201 further comprises a multi-bottle vibrating plate 204, on which a plurality of vibrating transducers 205 are applied.

The vibrating plate 204 is thus mechanically coupled with the bottles 203, and the vibrating transducers 205 are adapted to induce a mechanical vibration at ultrasonic frequencies in the bottles 203.

By means of the tie rods 206, which ensure a rigid interface between the bottles 203 and the vibrating plate 204 with cooperation from the support element 202, a system is created for transmitting the ultrasonic mechanical vibration to the bottles 203.

In the preferred embodiment of the apparatus 201, the vibrating transducers 205 are configured to stress the bottles 203 mainly in the axial direction with respect to the longitudinal axis of the bottles themselves.

The apparatus 201 also comprises control means (not shown), which allow adjusting the treatment parameters according to the method of the present invention.

Just like traditional gyropalette machines, the apparatus 201 further comprises rotation means 211 configured to change the inclination of the bottles with respect to the vertical over time, by rotating the basket, preferably via motor means (not shown).

Figure 3 illustrates the remuage apparatus 201 from a different perspective, more clearly showing the bottles 203 under treatment. Figures 2 and 3 show the remuage apparatus 201 in the configuration wherein the bottles 203 are typically loaded and arranged (horizontally) into the support element 202.

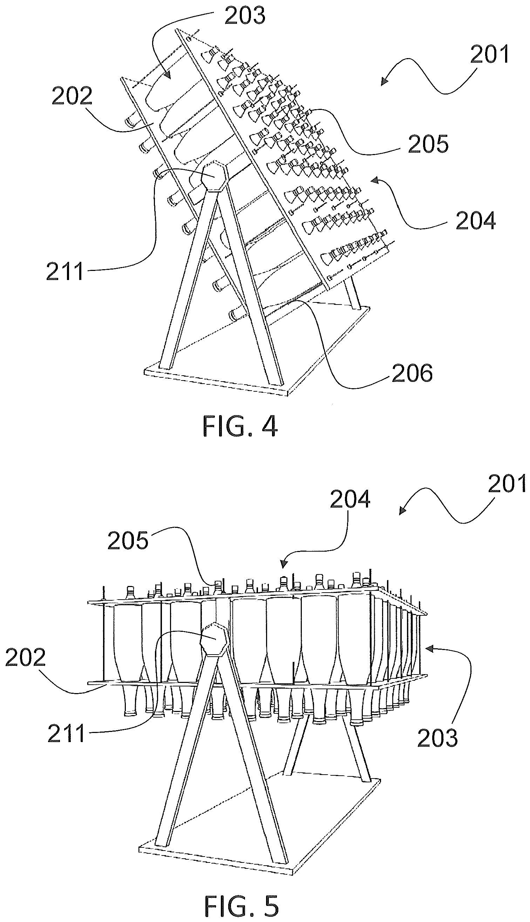

Figure 4 illustrates the remuage apparatus 201 in a different configuration, wherein the bottles are further tilted downwards to promote the accumulation of the residues in the necks of the bottles during the remuage process.

Figure 5 illustrates the remuage apparatus 201 in yet another configuration, wherein the bottles are tilted even further until they reach an inverse vertical position, i.e. the final treatment position.

As can be appreciated, the remuage apparatus 201 can be obtained by converting an existing gyropalette machine comprising a support element 202 configured to hold the bottles in a tilted position.

Such a conversion kit, which per se does not form part of the invention, will comprise one or more vibrating elements configured to be mechanically associated with the gyropalette machine, e.g. applied to the rear plate. Such vibrating elements comprise one or more ultrasonic transducers adapted to induce a mechanical vibration at ultrasonic frequencies in the parts mechanically coupled with the vibrating elements.

An existing gyropalette machine can thus be transformed for the execution of the remuage method according to the present invention.

### [INDUSTRIAL APPLICABILITY]

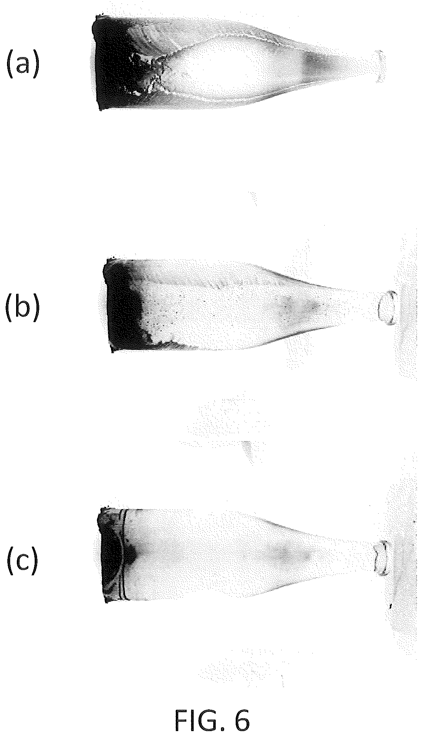

Figure 6 illustrates three conditions of the same bottle, i.e. before the treatment (sub-figure a), after tilting only (sub-figure b), and, finally, after a treatment with ultrasound in accordance with the present invention (sub-figure c).

With reference to the example of Figure 6, preliminary experimental results will now be provided, which demonstrate the inventiveness and industrial applicability of the remuage apparatus and method according to the present invention.

The remuage method according to the present invention was preliminarily conducted with the bottle kept at a constant angle of inclination throughout the tests, adopting various combinations of parameters considered to be particularly significant, i.e.: bottle inclination, number of applied transducers, and transducer orientation.

Other variables, such as, for example, the frequency of the ultrasonic vibrations (set to 28 kHz) and the duration of the ultrasonic treatment (set to include 4 steps of 10 active minutes alternated with 5 passive minutes, for a total duration of the test of 60 minutes), were not modified at this stage.

Average transducer power was set to 50 W. The bottle was a 0.75-liter bottle of sparkling wine.

About fifty tests were carried out in this configuration. Based on the results obtained, a subsequent experimentation process was defined by applying the method to bottles subjected to variable and progressive tilting, aiming at optimizing the bottle cleaning process.

In this case, bottles of sparkling wine that had arrived at the remuage phase (Figure 6, sub-figure a) were allowed to rest for a few days at an angle of inclination of 30° relative to the horizontal.

At the end of this period, they were subjected to the ultrasonic remuage treatment.

Piezoelectric transducers having a resonance frequency of 28 kHz were used, connected to a generator. The 10 minutes of ultrasonic treatment (active phase) were alternated with 5 minutes of rest (passive phase) to avoid an increase in wine turbidity due to the intensity of the treatment.

During the active phase of the process, the angle of inclination of the bottle was increased by one degree every three minutes up to 60°, and by one degree every two minutes for 30° more, until the bottle reached the upside-down vertical position.

Four tests were carried out with different combinations of transducer number and position. In all cases, the whole test lasted less than 4 h.

Examining the additional photographs of Figure 6 (sub-figure b, bottle treated by tilting only; and sub-figure c, bottle treated by tilting and ultrasonic treatment), one can notice that the important action of the ultrasonic vibrations according to the present invention occurs on the finer particulates that adhere to the inner surface of the bottle, which are clearly visible on the bottom of the latter.

The best results were attained with two transducers having their axis parallel to the axis of the bottle.

According to the traditional method of evaluation of remuage results, which is based on visual inspection as in a wine cellar, it is apparent that the bottle (Figure 6, sub-figure c) treated with ultrasound in accordance with the present invention is comparable to those normally available on the market.

As far as the remuage apparatus 201 is concerned, embodiments may be conceived which include one transducer per bottle, or a multi-bottle plate transmitting vibrations to several bottles at the same time.

## Claims

1. Remuage apparatus (101, 201) comprising a support element (102, 202) configured to hold one or more bottles (103, 203) in at least one tilted position with respect to the vertical, **characterized in that** said apparatus (101, 201) further comprises at least one rigid vibrating element (104, 204) configured to be mechanically coupled directly with said one or more bottles (103, 203), said at least one rigid vibrating element (104, 204) comprising at least one piezoelectric transducer (105, 205) adapted to induce a mechanical vibration at ultrasonic frequencies in said one or more bottles (103, 203), and
wherein said at least one rigid vibrating element (104, 204) is configured to maintain a rigid interface mechanical coupling between said at least one piezoelectric transducer (105, 205) and said one or more bottles (103, 203), in order to transmit said mechanical vibration at ultrasonic frequencies to said one or more bottles (103, 203), and
wherein said at least one piezoelectric transducer (105, 205) comprises at least one axial transducer with ultrasonic vibration, said axial transducer being configured to stress said one or more bottles (103, 203) in an axial direction with respect to the longitudinal axis of said one or more bottles.

2. Apparatus according to claim 1, wherein said at least one piezoelectric transducer (105, 205) further comprise at least one tangential transducer with ultrasonic vibration, said tangential transducer being configured to stress said one or more bottles (103, 203) in a tangential direction with respect to the circular section of the sidewall of said one or more bottles.

3. Apparatus according to claims 1 or 2, further comprising first control means (107, 108, 109) adapted to determine the operation of said at least one piezoelectric transducer (104) according to predetermined time intervals and/or at a predetermined oscillation frequency.

4. Apparatus according to any one of claims 1 to 3, wherein said support element (102, 202) further comprises rotation means (111, 211) configured to change the inclination of said one or more bottles (103, 203) with respect to the vertical over time.

5. Apparatus according to claim 4, further comprising second control means (107, 110) adapted to determine a periodical change of said inclination according to a predetermined time law.

6. Remuage method using the apparatus according to claim 1, the method comprising the steps of:
positioning one or more bottles (103, 203) onto said support element (102, 202) in at least one tilted position with respect to the vertical;
inducing a mechanical vibration at ultrasonic frequencies in said one or more bottles (103, 203) by means of said at least one piezoelectric transducer (105, 205) coupled to said rigid vibrating element (104, 204) mechanically coupled directly with said one or more bottles (103,203),
a rigid interface mechanical coupling being maintained between said vibrating element (104, 204) and said one or more bottles (103, 203), in order to transmit said mechanical vibration at ultrasonic frequencies to said one or more bottles (103, 203),
wherein said mechanical vibration stresses said one or more bottles (103, 203) in an axial direction with respect to the longitudinal axis of said one or more bottles (103, 203).

7. Method according to claim 6 using the apparatus according to claim 2, wherein said mechanical vibration further stresses said one or more bottles (103, 203) in a tangential direction with respect to the circular section of the sidewall of said one or more bottles (103, 203).

8. Method according to claims 6 or 7 using the apparatus according to claim 3, wherein said mechanical vibration is generated at predetermined time intervals and/or at a predetermined oscillation frequency, comprised between 20 and 50 kHz, or comprised between 25 and 30 kHz or between 35 and 45 kHz.

9. Method according to any one of claims 6 to 8 using the apparatus according to claim 4, wherein the inclination of said one or more bottles (103, 203) with respect to the vertical is changed over time.

10. Method according to claim 9, wherein said mechanical vibration is combined with a gradual increase in the inclination of said one or more bottles (103, 203) in the overturning direction.

## Patentansprüche

1. Vorrichtung zur Remuage (101, 201) mit einem Trägerelement (102, 202), das konfiguriert ist, um eine oder mehrere Flaschen (103, 203) in mindestens einer geneigten Position in Bezug auf die Vertikale zu halten, **dadurch gekennzeichnet, dass** die Vorrichtung (101, 201) weiter mindestens ein starres Schwingelement (104, 204) umfasst, konfiguriert, um direkt mit der einen oder mehreren Flaschen (103, 203) mechanisch gekoppelt zu sein, wobei das mindestens eine starre Schwingelement (104, 204) mindestens einen piezoelektrischen Wandler (105, 205) umfasst, der angepasst ist, um eine mechanische Vibration bei Ultraschallfrequenzen in der einen oder mehreren Flaschen (103, 203) zu induzieren, und
wobei das mindestens eine starre Schwingelement (104, 204) konfiguriert ist, um eine mechanische Kopplung mit starrer Schnittstelle zwischen dem mindestens einen piezoelektrischen Wandler (105, 205) und der einen oder mehreren Flaschen (103, 203) aufrechtzuerhalten, um die mechanische Schwingung bei Ultraschallfrequenzen auf die eine oder mehreren Flaschen (103, 203) zu übertragen, und
wobei der mindestens eine piezoelektrische Wandler (105, 205) mindestens einen axialen Wandler mit Ultraschallschwingung umfasst, wobei der axiale Wandler konfiguriert ist, um die eine oder mehreren Flaschen (103, 203) in einer axialen Richtung in Bezug auf die Längsachse der einen oder mehreren Flaschen zu belasten.

2. Vorrichtung nach Anspruch 1, wobei der mindestens eine piezoelektrische Wandler (105, 205) weiter mindestens einen tangentialen Wandler mit Ultraschallschwingung umfasst, wobei der tangentiale Wandler konfiguriert ist, um die eine oder mehreren Flaschen (103, 203) in einer tangentialen Richtung in Bezug auf den kreisförmigen Abschnitt der Seitenwand der einen oder mehreren Flaschen zu belasten.

3. Vorrichtung nach Anspruch 1 oder 2, weiter umfassend erste Steuermittel (107, 108, 109), die angepasst sind, um den Betrieb des mindestens einen piezoelektrischen Wandlers (104) gemäß vorbestimmten Zeitintervallen und/oder mit einer vorbestimmten Schwingungsfrequenz zu bestimmen.

4. Vorrichtung nach einem der Ansprüche 1 bis 3, wobei das Trägerelement (102, 202) weiter ein Drehmittel (111, 211) umfasst, das konfiguriert ist, um die Neigung der einen oder mehreren Flaschen (103, 203) in Bezug auf die Vertikale im Laufe der Zeit zu ändern.

5. Vorrichtung nach Anspruch 4, weiter umfassend zweite Steuermittel (107, 110), die angepasst sind, um eine periodische Änderung der Neigung gemäß einem vorbestimmten Zeitgesetz zu bestimmen.

6. Verfahren zur Remuage unter Verwendung der Vorrichtung nach Anspruch 1, wobei das Verfahren die Schritte umfasst:
Positionieren einer oder mehrerer Flaschen (103, 203) auf dem Trägerelement (102, 202) in mindestens einer geneigten Position in Bezug auf die Vertikale;
Induzieren einer mechanischen Vibration bei Ultraschallfrequenzen in der einen oder mehreren Flaschen (103, 203) mittels des mindestens einen piezoelektrischen Wandlers (105, 205), der mit dem starren Schwingelement (104, 204) gekoppelt ist, das mechanisch direkt mit der einen oder mehreren Flaschen (103, 203) gekoppelt ist,
eine mechanische Kopplung mit starrer Schnittstelle, die zwischen dem Schwingelement (104, 204) und der einen oder mehreren Flaschen (103, 203) aufrechterhalten wird, um die mechanische Vibration mit Ultraschallfrequenzen auf die eine oder mehreren Flaschen (103, 203) zu übertragen,
wobei die mechanische Vibration die eine oder mehreren Flaschen (103, 203) in einer axialen Richtung in Bezug auf die Längsachse der einen oder mehreren Flaschen (103, 203) belastet.

7. Verfahren nach Anspruch 6 unter Verwendung der Vorrichtung nach Anspruch 2, wobei die mechanische Vibration die eine oder mehrere Flaschen (103, 203) in tangentialer Richtung in Bezug auf den kreisförmigen Abschnitt der Seitenwand der einen oder mehreren Flaschen (103, 203) weiter belastet.

8. Verfahren nach Anspruch 6 oder 7 unter Verwendung der Vorrichtung nach Anspruch 3, wobei die mechanische Vibration in vorbestimmten Zeitintervallen und/oder mit einer vorbestimmten Schwingungsfrequenz erzeugt wird, die zwischen 20 und 50 kHz liegt oder zwischen 25 und 30 kHz oder zwischen 35 und 45 kHz liegt.

9. Verfahren nach einem der Ansprüche 6 bis 8 unter Verwendung der Vorrichtung nach Anspruch 4, wobei die Neigung der einen oder mehreren Flaschen (103, 203) in Bezug auf die Vertikale mit der Zeit verändert wird.

10. Verfahren nach Anspruch 9, wobei die mechanische Vibration mit einer allmählichen Erhöhung der Neigung der einen oder mehreren Flaschen (103, 203) in Kipprichtung kombiniert wird.

## Revendications

1. Appareil de remuage (101, 201) comprenant un élément de support (102, 202) conçu pour maintenir une ou plusieurs bouteilles (103, 203) dans au moins une position inclinée par rapport à la verticale, **caractérisé en ce que** ledit appareil (101, 201) comprend en outre au moins un élément vibrant rigide (104, 204) conçu pour être couplé mécaniquement directement à ladite au moins une bouteille (103, 203), ledit au moins un élément vibrant rigide (104, 204) comprenant au moins un transducteur piézoélectrique (105, 205) adapté pour induire une vibration mécanique à des fréquences ultrasonores dans ladite au moins une bouteille (103, 203), et ledit au moins un élément vibrant rigide (104, 204) étant conçu pour maintenir une interface d'accouplement mécanique rigide entre ledit au moins un transducteur piézoélectrique (105, 205) et ladite au moins une bouteille (103, 203) afin de transmettre ladite vibration mécanique à des fréquences ultrasonores à ladite au moins une bouteille (103, 203), et ledit au moins un transducteur piézoélectrique (105, 205) comprenant au moins un transducteur axial à vibration ultrasonore, ledit transducteur axial étant conçu pour contraindre ladite au moins une bouteille (103, 203) dans une direction axiale par rapport à l'axe longitudinal de ladite au moins une bouteille.

2. Appareil selon la revendication 1, dans lequel ledit au moins un transducteur piézoélectrique (105, 205) comprend en outre au moins un transducteur tangentiel à vibration ultrasonore, ledit transducteur tangentiel étant conçu pour contraindre ladite au moins une bouteille (103, 203) dans direction tangentielle par rapport à la section circulaire de la paroi latérale de ladite au moins une bouteille.

3. Appareil selon la revendication 1 ou 2, comprenant en outre un premier moyen de commande (107, 108, 109) adapté pour déterminer le fonctionnement dudit au moins un transducteur piézoélectrique (104) selon des intervalles de temps prédéterminés et/ou à une fréquence d'oscillation prédéterminée.

4. Appareil selon l'une quelconque des revendications 1 à 3, dans lequel ledit élément de support (102, 202) comprend en outre un moyen de rotation (111, 211) conçu pour modifier l'inclinaison de ladite au moins une bouteille (103, 203) par rapport à la verticale au cours du temps.

5. Appareil selon la revendication 4, comprenant en outre un deuxième moyen de commande (107, 110) adapté pour déterminer un changement périodique de ladite inclinaison selon une loi temporelle prédéterminée.

6. Procédé de remuage utilisant l'appareil selon la revendication 1, le procédé comprenant les étapes de :
positionner au moins une bouteille (103, 203) sur ledit élément de support (102, 202) dans au moins une position inclinée par rapport à la verticale ;
induire une vibration mécanique à des fréquences ultrasonores dans ladite au moins une bouteille (103, 203) au moyen dudit au moins un transducteur piézoélectrique (105, 205) couplé audit élément vibrant rigide (104, 204) couplé mécaniquement directement à ladite au moins une bouteille (103, 203),
une interface d'accouplement mécanique rigide étant maintenue entre ledit élément vibrant (104, 204) et ladite au moins une bouteille (103, 203) afin de transmettre ladite vibration mécanique à des fréquences ultrasonores à ladite au moins une bouteille (103, 203),
ladite vibration mécanique contraignant ladite au moins une bouteille (103, 203) dans une direction axiale par rapport à l'axe longitudinal de ladite au moins une bouteille (103, 203).

7. Procédé selon la revendication 6, utilisant l'appareil selon la revendication 2, dans lequel ladite vibration mécanique contraint en outre ladite au moins une bouteille (103, 203) dans une direction tangentielle par rapport à la section circulaire de la paroi latérale de ladite au moins une bouteille (103, 203).

8. Procédé selon les revendications 6 ou 7, utilisant l'appareil selon la revendication 3, dans lequel ladite vibration mécanique est générée à des intervalles de temps prédéterminés et/ou à une fréquence d'oscillation prédéterminée, comprise entre 20 et 50 kHz, ou comprise entre 25 et 30 kHz ou entre 35 et 45 kHz.

9. Procédé selon l'une quelconque des revendications 6 à 8, utilisant l'appareil selon la revendication 4, dans lequel l'inclinaison de ladite au moins une bouteille (103, 203) par rapport à la verticale est modifiée au cours du temps.

10. Procédé selon la revendication 9, dans lequel ladite vibration mécanique est combinée à une augmentation progressive de l'inclinaison de ladite au moins une bouteille (103, 203) dans la direction de retournement.
